(19) Europäisches Patentamt
European Patent Office
Office européen des brevets

(11) Veröffentlichungsnummer: **0 196 596**
**B1**

# (12) EUROPÄISCHE PATENTSCHRIFT

(45) Veröffentlichungstag der Patentschrift: **24.08.88**

(51) Int. Cl.⁴: **C 07 C 143/13**, B 01 F 17/22 // C08F2/24

(21) Anmeldenummer: **86104042.6**

(22) Anmeldetag: **24.03.86**

## (54) Verzweigte Sulfosuccinamidsäure-Emulgatoren zur Herstellung besonders scherstabiler Dispersionen.

(30) Priorität: **04.04.85 DE 3512335**

(43) Veröffentlichungstag der Anmeldung: **08.10.86 Patentblatt 86/41**

(45) Bekanntmachung des Hinweises auf die Patenterteilung: **24.08.88 Patentblatt 88/34**

(84) Benannte Vertragsstaaten: **DE FR GB IT**

(56) Entgegenhaltungen:
**DE - C - 552 758**
**FR - A - 2 137 784**
**GB - A - 2 091 720**
**US - A - 2 917 431**
**US - A - 4 076 744**

(73) Patentinhaber: **BAYER AG, Konzernverwaltung RP Patentabteilung, D-5090 Leverkusen 1 Bayerwerk (DE)**

(72) Erfinder: **Hendricks, Udo Winfried, Dr., Am Höhenfeld 12, D-5068 Odenthal (DE)**
Erfinder: **Schmidt, Adolf, Dr., Roggendorfstrasse 67, D-5000 Köln 80 (DE)**

EP 0 196 596 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind neue Sulfosuccinamidsäuren und -Derivate der Formel (I)

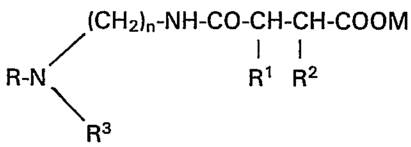
(I),

in der

R für einen geradkettigen oder verzweigten gesättigten oder ungesättigten Alkylrest mit 8-22 Kohlenstoffatomen oder einen Rest der Formel $R^4$-O-$-(CH_2)_3$-, ($R^4$ = Alkyl mit 8-22 C-Atomen)

von den Resten

$R^1$ und $R^2$ der eine für Wasserstoff, der andere für $-SO_3M^1$ und

$R^3$ für einen Rest der Formel

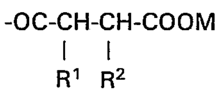
oder der Formel

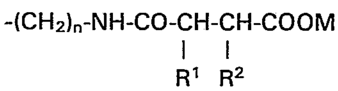

stehen,

n eine ganze Zahl von 2-4 und M und $M^1$ unabhängig voneinander Wasserstoff oder ein Alkali-Metall, eine Ammonium-, $C_1$ bis $C_4$-Alkylammonium- oder $C_2$ bis $C_3$-Hydroxyalkylammoniumgruppe bedeuten.

Ein weiterer Gegenstand ist die Verwendung der Verbindungen der Formel I als Tenside und Emulgatoren in wässrigen Systemen.

Beispiele für R sind der 2-Ethylhexyl-, Decyl-, Dodecyl-, Tetradecyl-, Hexadecyl-, Octadecyl-, Octadecenyl-, Dodecyloxypropyl- und Octadecyloxypropyl-Rest.

Beispiele für M und $M^1$ sind Natrium, Kalium, Ammonium, Mono-, Di- oder Trimethylammonium, Mono-, Di- oder Triethylammonium, Mono-, Di- oder Trihydroxyethylammonium und Mono- oder Di-hydroxypropylammonium.

Die Verbindungen der Formel I können nach an sich bekannten Verfahren hergestellt werden, indem beispielsweise Polyamine der Formel II

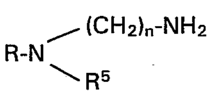
(II),

in der R und n die oben angegebene Bedeutung haben und

$R^5$ für Wasserstoff oder für $-(CH_2)_n-NH_2$ steht, mit Maleinsäureanhydrid umgesetzt werden, wobei das Molverhältnis der Summe von primären und sekundären Aminogruppen zu Maleinsäureanhydrid 1:0,9 bis 1:1,1, vorzugsweise 1:1, beträgt und anschliessend die erhaltenen Umsetzungsprodukte mit Alkali- oder Ammoniumsulfiten zur Reaktion gebracht werden.

Die Menge an Alkali- oder Ammoniumsulfit wird dabei so gewählt, dass pro Mol eingesetztes Maleinsäureanhydrid 0,95 bis 1,05 Mol Alkali- oder Ammoniumsulfit zur Anwendung gelangen. Amine der Formel II, in denen $R^5$ für Wasserstoff steht, sind beispielsweise in J. Org. Chem. Bd. 15 (1950), S. 51 ff. und J. Am. Chem. Soc., Bd. 67 (1945), S. 1581 beschrieben. Amine der Formel II, in denen $R^5$ für $-(CH_2)_n-NH_2$ steht, können nach US-PS 3 028 415 und US-PS 3 615 797 hergestellt werden.

Die meisten der handelsüblichen und bekannten Emulgatoren bestehen aus einem hydrophoben Kohlenwasserstoff- oder Alkylarylrest mit einer hydrophilen Gruppe, beispielsweise einer Sulfonat-, Sulfat-, Carboxylat-, Phosphat- oder Phosphonat-Gruppe. Es können auch an einen hydrophoben Rest Einheiten von Ethylenoxid oder Propylenoxid über geeignete reaktive Gruppen ankondensiert sein, wodurch man ebenfalls Tensideigenschaften erzielt.

Statt einem hydrophoben Rest können auch, wie in den Sulfobernsteinsäurediestern, zwei hydrophobe Reste an eine hydrophile Gruppe gebunden sein. Eine Zusammenstellung von verschiedenen Emulgatoren und Herstellern findet sich z.B. in «Mc Cutcheon's Detergents and Emulsifiers» 1971, 1972 und 1973.

Emulgatoren mit mehreren hydrophilen Gruppen an einem hydrophoben Rest sind bekannt und z.B. in den US-PSen 2 206 249, 2 438 092 und 2 435 810 beschrieben.

Eine grössere Bedeutung hat von den Emulgatoren mit mehreren hydrophilen anionischen Gruppen lediglich das Tetranatriumsalz der Formel

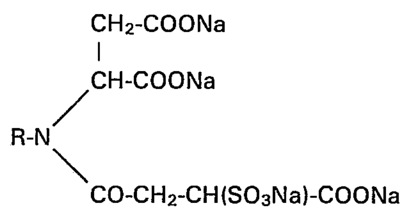
(III)

erreicht, wobei R Octadecyl bedeutet. Diese Verbindung soll z.B. zur Herstellung feinteiliger Kunststoffdispersionen (Ausnahme Vinylacetat) besonders geeignet sein, ferner soll dieser Emulgator ausgezeichnet dazu geeignet sein, die mechanische Stabilität der Dispersionen zu verbessern. Er wird auch zum nachträglichen Zusetzen empfohlen.

Die neuen Verbindungen der Formel I übertreffen die an sich bekannte Verbindung der Formel III in ihrer einzigartig erscheinenden Eigenschaft, die Scherstabilität zu verbessern und zeigen dabei noch andere Vorteile. So ist bekannt, dass die Verbindung der Formel III sich in sauren Medien, insbesondere bei erhöhter Temperatur, trübt und daher auch bei der Polymerisation jener Monomerer Schwierigkeiten macht, welche vorzugsweise im sauren pH-Bereich polymerisiert werden.

Die neuen Verbindungen der Formel I zeigen eine ausgezeichnete, die Scherstabilität von Kunststoffdispersionen verbessernde Wirkung und sind auch in saurem Milieu wirksam.

Darüber hinaus ergeben sich feinteilige Dispersionen mit einer besonders niedrigen Viskosität, welche zudem beim Entmonomerisieren nicht schäumen.

Die Wasserlöslichkeit der erfindungsgemässen Verbindungen ist ausgezeichnet, sie besitzen ein gutes Netzvermögen, die Tendenz zur Schaumbildung, insbesondere zur Bildung eines stabilen feinblasigen Schaums ist eingeschränkt. Obwohl die erfindungsgemässen Verbindungen spezielle für die Emulsionspolymerisation geeignete Eigenschaften besitzen, können sie auch zur Herstellung von Schreib- und Zeichentinten, Tuschen, Reinigungsmittel aller Art, zum Schmälzen, Walken, Mercerisieren, Präparieren, als Textilweichmacher, zum Färben, zur chemischen Reinigung, als Spinnbadzusatz bei der Viskoseherstellung, für Lickeröle, für die Kaltfettung des Leders, zur Dispergierung von Kalkseifen, als Hilfsmittel bei der Teppichrückenbeschichtung, Papierbeschichtung, zum Entfetten von Metalloberflächen, als Hilfsmittel bei der Flotation und Erdölförderung, als Zusätze zu Pflanzenschutzmittel, in der Photoindustrie, zur Desinfektion, als Bauhilfsstoffe und im Bergbau (vgl. Technische Anwendung der grenzflächenaktiven Verbindungen in Chemische Taschenbücher Nr. 14, Verlag Chemie Weinheim, Verfasser H. Bueren und H. Grossmann 1971) Verwendung finden.

Grundsätzlich lassen sich alle technisch wichtigen Monomeren, deren Eignung für die Emulsionspolymerisation bekannt ist, in Gegenwart der erfindungsgemässen Verbindungen in schwach saurem bis alkalischen pH-Bereich polymerisieren. Insbesondere seien genannt Ethylen, Butadien-(1,3), Isopren, Chloropren, Styrol, substituierte Styrole wie 1-Methylstyrol (in Kombination mit anderen Monomeren), Vinylchlorid, Vinylidenchlorid, Vinylacetat, Vinylpropionat, Vinylversatic-Ester, Vinylisobutylether, Acrylnitril, Methacrylnitril, Methylacrylat, Ethylacrylat, n-Butylacrylat, 2-Ethylhexylacrylat, Methylmethacrylat, Ethylmethacrylat, n-Butylmethacrylat und deren Mischmengen, deren Copolymerisierbarkeit sich nach bekannten Copolymerisationsparametern abschätzen lässt. Die Glastemperatur der so erhältlichen Copolymerisate lässt sich ebenfalls nach bekannten Gleichungen rechnerisch abschätzen. Die so erhältlichen Kunststoffdispersionen können filmbildend oder nichtfilmbildend sein. Neben den genannten Monomeren können in bekannter Weise Acrylsäure, Methacrylsäure, Acrylamid, Methacrylamid sowie Vinylmonomere mit zusätzlichen funktionellen Gruppen einpolymerisiert werden. Solche Monomere sind z.B. in F. Hölscher «Dispersionen synthetischer Hochpolymerer», Teil I, Springer Verlag Berlin Heidelberg, Seite 56 tabelliert.

Da die erfindungsgemässen Verbindungen der Formel I den mit ihnen hergestellten Kunststoffdispersionen eine ausgezeichnete Stabilität verleihen, empfehlen sie sich auch als Zusätze zur Dispergierung der verschiedenen Pigmente in Kunststoffdispersionen. So können sie auch breite Verwendung finden in Anstrichbindern, Papierbindern, Lederbindern und Textildruckbindern, wo gute Redispergierbarkeit verlangt wird. Es ist auch möglich, Dispersionen, welche mit üblichen anionischen oder nichtionischen Emulgatoren hergestellt wurden, durch nachträglichen Zusatz der erfindungsgemässen Emulgatoren zu einer ausgezeichneten Scherstabilität zu verhelfen.

Die Polymerisation in Gegenwart der erfindungsgemässen Verbindungen der Formel kann nach an sich bekannten Methoden diskontinuierlich, halbkontinuierlich, vollkontinuierlich durchgeführt werden. Hierbei kann grundsätzlich auch mit Saatlatexvorlagen gearbeitet werden.

Die erfindungsgemässen Verbindungen der Formel I führen, in Mengen von 0,5 bis maximal 8% bezogen auf Monomere, eingesetzt, zu vergleichsweise feinteiligen Suspensionen bzw. Dispersionen. So sind Dispersionen von Teilchen eines mittleren Durchmessers von ca. 25 nm bis 500 nm unter Anwendung der üblichen Polymerisationsmethoden herstellbar. Bei feinteiligen Butadien-Homo- und Copolymerisatdispersionen wurde beispielsweise eine niedrige Viskosität auch bei Feststoffgehalten von höher als 40% gefunden. Besonders vorteilhaft können mit Hilfe der erfindungsgemässen Verbindungen der Formel I die feinteiligen Komponenten bimodaler Systeme hergestellt werden, wie sie neuerdings steigendes Interesse zur Herstellung pigmentierter hochgefüllter Streichmassen finden. Hierbei können die feinteiligen Latice mit Hilfe der erfindungsgemässen Verbindungen hergestellt und anschliessend mit grobteiligeren Latices, deren Durchmesser um den Faktor 1,5 bis 4 grösser ist, abgemischt werden.

Es ist aber auch möglich, eine Polymerisation eines Latex bis zu grossen mittleren Teilchendurchmessern durchzuführen und danach durch Zugabe einer erfindungsgemässen Verbindung die kritische Mizellkonzentration zu erreichen und danach neue Teilchen zu bilden, so dass bimodale Systeme in einem Eintopfverfahren entstehen können.

Aufgrund der multifunktionellen hydrophilen Gruppen können die erfindungsgemässen Emulgatoren in Kombinationen, welche beispielsweise mit Carboxylgruppen reagieren, einkondensiert werden. Man setzt dann zweckmässigerweise statt den Natrium- oder Kaliumsalzen die Ammoniumsalze der erfindungsgemässen Emulgatoren ein.

Der in den nachfolgenden Beispielen angegebene mittlere Latexteilchendurchmesser ist turbimetrisch ermittelt worden. Bei dieser Methode wird die spezifische Trübung K bestimmt und mit Hilfe einer Eichkurve, welche den Zusammenhang zwischen K und d darstellt, d ermittelt. d steht für DAV (vgl. DIN 53 206).

*Beispiel 1*

121 Teile N-Dodecyl-propandiyldiamin wurden in 80 Teilen Toluol gelöst und bei 50-60°C mit 98 Teilen Maleinsäureanhydrid versetzt. Nach 30 Minuten Rühren bei einer Temperatur von 50-60°C wurde das Toluol unter vermindertem Druck bei 50-60°C abdestilliert. Es wurden 221 Teile der rohen N-Dodecyl-N,N'-propan-diyl-bismaleamidsäure

$$C_{12}H_{25}\text{-}N\begin{cases}(CH_2)_3\text{-}NH\text{-}CO\text{-}CH{=}CH\text{-}COOH\\ CO\text{-}CH{=}CH\text{-}COOH\end{cases}\qquad (IV)$$

erhalten.

Säurezahl: berechnet: 255,7 gefunden: 253

210 Teile des vorstehend genannten Produktes wurden mit 100 Teilen Isopropanol und einer Lösung von 120 Teilen Natriumsulfit in 400 Teilen Wasser versetzt und bei 80-90°C gerührt, bis die titrimetrisch ermittelte Konzentration an Sulfit unter 0,02% gesunken war.

Man erhielt 830 Teile einer klaren, viskosen, wässrigen Lösung der Sulfosuccinamidsäure der Formel

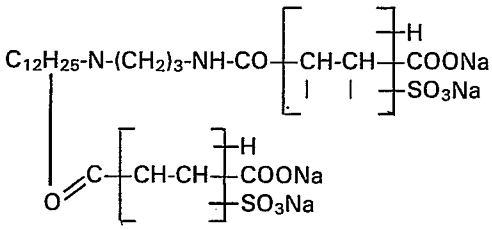

(V)

*Beispiel 2*

98 Teile Maleinsäureanhydrid wurden in 120 ml Toluol bei 50-60°C gelöst und bei gleicher Temperatur mit 163 Teilen eines technischen Talgfettpropylendiamins (Aminäquivalent 162) versetzt. Nach 30 Minuten Rühren bei 50-60°C wurde das Toluol bei vermindertem Druck abdestilliert. Man erhielt als Rückstand 261 Teile der rohen N-Talgfettalkyl-N,N'-propandiyl-bis-maleamidsäure

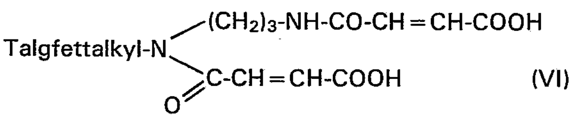

(VI)

Säurezahl: berechnet: 214,6 gefunden: 220

Das erhaltene Produkt wurde mit 140 Teilen Isopropanol und einer Lösung von 126 Teilen Natriumsulfit in 550 Teilen Wasser versetzt und bei 80-90°C 4 Stunden gerührt. Die Sulfitkonzentration betrug danach noch 0,004%.

Es wurden 1077 Teile einer klaren viskosen wässrigen Lösung der Sulfosuccinamidsäure der Formel

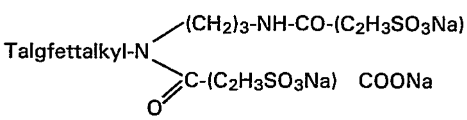

(VII)

erhalten.

In analoger Weise erhält man aus N-Dodecyl-ethyldiamin durch Umsetzung mit Maleinsäureanhydrid und Natriumsulfit die Sulfosuccinamidsäure der Formel

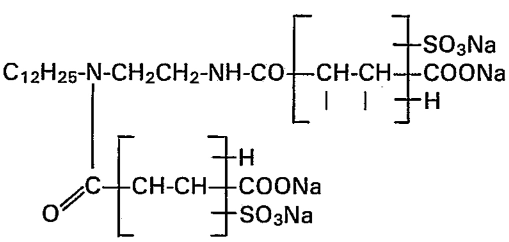

(VIII)

*Beispiel 3*

53 Teile Maleinsäureanhydrid wurden in Toluol gelöst und bei 40-50°C mit einer Lösung von 100 Teilen N-(3-Aminopropyl)-N-octadecyl-1,3-propandiyldiamin versetzt. Nach zweistündigem Rühren bei 40-50°C wurde das Toluol unter vermindertem Druck abdestilliert. Als Rückstand wurden 152 Teile der rohen Bismaleamidsäure der Formel

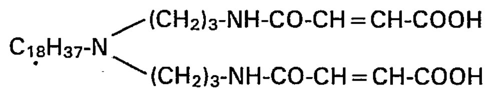

(IX)

erhalten.

Säurezahl: berechnet: 193 gefunden: 203
Basen-N: berechnet: 2,4% gefunden: 2,5%

145 Teile der rohen Bis-maleamidsäure wurden mit 190 Teilen Isopropanol und einer Lösung von 64 Teilen Natriumsulfit in 250 Teilen Wasser 6 Stunden bei 80-90°C gerührt, bis die Konzentration an Sulfit unter 0,1% abgesunken war. Man erhielt eine klare viskose wässrige Lösung der Sulfosuccinamidsäure der Formel

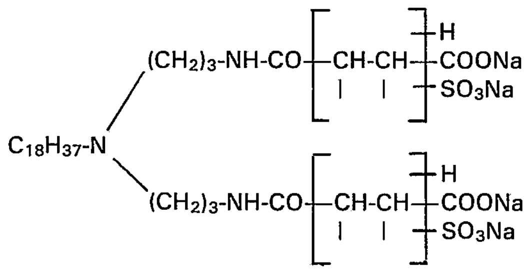

(X)

*Beispiel 4*

In einen 40 Liter Edelstahlautoklaven, ausgerüstet mit Blattrührer, Druck- und Temperaturschreiber und pH Messgerät werden unter Ausschluss von Luftsauerstoff eingefüllt:

| | |
|---|---|
| Entionisiertes Wasser | 14 170 g |
| Emulgator, hergestellt gemäss Beispiel 1 als 10%ige wässrige Lösung | 3 813 g |
| Tert. Dodecylmercaptan | 40 g |
| Kaliumperoxodisulfatlösung 2,5%ig in Wasser | 1 196 g |
| Butadien | 12 788 g |

Hierbei werden alle Komponenten ausser der Kaliumpersulfatlösung vorgelegt, das Gemisch wird auf 60°C aufgeheizt, danach wird die Kaliumpersulfatlösung auf einmal hinzugegeben. Die Temperatur (innen) wird elektrisch geregelt und auf ca. 1 Grad genau gehalten. Nach 6 Stunden wird die Temperatur auf 62°C, nach 12 Sunden von 62°C auf 65°C, nach 17 Stunden von 65°C auf 68°C erhöht.

Stündlich werden Eindampfproben genommen, dabei der Feststoffgehalt des Latex bestimmt, seine Oberflächenspannung gemessen, sein pH-Wert ermittelt und seine Teilchengrösse gemessen.

Es ergeben sich folgende Werte (vgl. Tabelle I):

| Zeit (h) | Feststoff Gew.-% | pH-Wert elektr. | Oberflächenspannung dyn/cm (Stalagmometer) | mittlerer Teilchendurchmesser (nm) (Trübung) |
|---|---|---|---|---|
| 1 | 3,6 | 5,8 | 46,3 | 30 |
| 3 | 5,8 | 5,5 | 51,8 | 63 |
| 5 | 8,6 | 5,9 | 59,9 | 78 |
| 9 | 19,2 | 6,3 | 65,2 | 79 |
| 13 | 32,7 | 6,5 | 66,2 | 84 |
| 18 | 40,3 | 6,85 | 66,5 | 90 |

Im Reaktor befindet sich nach der Polymerisation kein Koagulat. Der Latex lässt sich leicht von Restmonomeren befreien, wobei keine Schaumbildung auftritt. Der Latex ist dünnflüssig und vollkommen frei von Stippen und Mikrokoagulat.

*Beispiel 5*

In einen 6 Liter Edelstahlautoklaven, ausgerüstet mit Blattrührer, Druck- und Temperaturschreiber sowie pH-Messgerät werden unter Ausschluss von Luftsauerstoff gefüllt:

| | |
|---|---|
| Entionisiertes Wasser | 2 032 g |
| Emulgator, hergestellt gemäss Beispiel 3, als 10%ige wässrige Lösung | 546,6 g |
| Tert. Dodecylmercaptan | 5,7 g |
| Kaliumperoxodisulfatlösung, 2,5%ig, in Wasser | 59,5 g |
| Kaliumperoxodisultatlösung, 2,5%ig, in Wasser | 112 g |
| Butadien | 1 832 g |

Alle Komponenten ausser den Aktivatorlösungen werden vorgelegt, das Gemisch bei 150 Umdrehungen pro Minute auf 60°C aufgeheizt. Ist die Temperatur von 60°C erreicht, wird die erste Aktivatorlösung (59,5 g) in den Autoklaven eingeführt, die zweite Aktivatorlösung wird im Verlauf von 14 Stunden zudosiert. Stündlich werden Proben genommen. Der Verlauf der Polymerisation geht aus nachfolgender Tabelle hervor:

| Zeit (h) | Temperatur °C | Druck bar | Feststoffgehalt % | mittlerer Teilchendurchmesser (nm) |
|---|---|---|---|---|
| 1 | 60 | 7,8 | 4 | 25 |
| 2 | 60 | 7,6 | 5,2 | — |
| 3 | 60 | 7,3 | 8,0 | — |
| 4 | 60 | 6,8 | 8,7 | — |
| 5 | 60 | 6,8 | 10,5 | — |
| 6 | 60 | 6,5 | 13,0 | — |
| 7 | 62 | 6,9 | 15,1 | — |
| 8 | 62 | 6,8 | 22,0 | — |
| 9 | 63 | 6,8 | 28,4 | 47 |
| 10 | 64 | 6,5 | 30,7 | — |
| 11 | 68 | 6,8 | 33,9 | 72 |
| 12 | 68 | 4,5 | 35,8 | — |
| 13 | 68 | 3,5 | 38,0 | — |
| 14 | 68 | 2,5 | 38,5 | — |
| 15 | 68 | 1,8 | 39,0 | — |
| 16 | 68 | 1,2 | 39,5 | 73 |
| 17 | 68 | 0,7 | 39,7 | — |

Bei der Polymerisation entstand keinerlei Koagulat und der Latex erwies sich als stippenfrei und frei von Mikrokoagulat. Beim Entmonomerisieren schäumte der Latex nicht und die Auslaufzeit des entmonomerisierten Latex lag bei einem Feststoffgehalt von ca. 41% bei ca. 30 Sekunden in dem Auslaufbecher nach DIN 53 211 (100 ccm Dispersion, 20 Grad C, 4 mm Düse).

*Beispiel 6*

Die nach Beispiel 4 und 5 hergestellten, entmonomerisierten Polybutadienlatices können zwischen den Fingerkuppen durch einfaches Scheren nicht zu Koagulatwürstchen zerrieben werden. Zur exakteren Beurteilung der Scherstabilität wurde wie folgt verfahren:

500 g Latex wurden durch Zugabe von wässriger Ammoniaklösung auf pH = 10 eingestellt. Danach wurde der Latex auf einen Feststoffgehalt von 35 Gew.-% verdünnt.

80 g dieses 35%igen Latex füllte man in einen 21 cm hohen, aussen mit Kühlmantel versehenen zylindrischen Metallbecher mit lichtem Durchmesser 6 cm. Der Metallbecher war in einen Edelstahlklotz der Breite 13 cm, der Länge 13 cm und der Höhe 5 cm mit zylindrischer Aussparung eingebettet und in diesem durch Rändelschrauben befestigt. Im Inneren des Metallbechers befanden sich, gleichmässig verteilt und mit Spannringen an den Wänden befestigt, 4 vom Boden über den Gefässrand führende Wellenbrecher, welche rechtwinklig zur Oberfläche der Gefässwand standen und 4mm breit waren.

In das Innere des Bechers und den Latex tauchte ein Rührorgan, bestehend aus einer einfachen Scheibe der Dicke 2 mm und des Durchmessers 2 cm. Die Scheibe war an einem ca. 8 cm langen, in Scheibennähe ca. 5 mm, nach oben sich verstärkenden Schaft angebracht, der von einem hochtourigen Motor angetrieben wurde. Die Vorrichtung besass eine exakte Drehzahlmessung und die Umdrehungszahl liess sich exakt auf einen bestimmten Wert, hier 20 000 Umdrehungen pro Minute, einregulieren. Nach einer von einer elektronischen Stoppuhr vorgegebenen Zeit, hier genau 20 Minuten, wurde der Motor abgestellt. Die gesamte Vorrichtung befand sich in einem schallisolierten Kasten. Nach dieser Scherbeanspruchung wurde der Inhalt des Metallbechers durch ein feines Sieb aus Edelstahl mit der quadratischen Maschenweite 50 Mikrometer filtriert, der im Sieb verbleibende Koagulatanteil bis zur Gewichtskonstanz getrocknet und zurückgewogen.

Bei den beiden alkalisierten Latices blieb nach dieser Prozedur praktisch kein Koagulat (ca. 0,01 g) zurück. Diese Latices sind mithin ausserordentlich scherstabil. Beim Reduzieren des pH-Wertes z.B. durch Zugabe von Essigsäure nimmt die Stabilität der Dispersionen merklich ab, um im schwach sauren pH-Bereich mit den üblichen Emulgatoren vergleichbar zu werden.

Durch Zusätze von mehrwertigen Metallionen lassen sich die oben genannten Latices agglomerieren; auch eine Agglomeration durch mechanische Scherbeanspruchung ist im neutralen bis schwach angesäuerten Zustand möglich.

*Beispiel 7*

Es soll gezeigt werden, dass Zusätze der erfindungsgemässen Emulgatoren zu einer mit an sich bekannten anionischen Emulgatoren hergestellten Dispersion deren Scherstabilität wesentlich verbessern. Ferner wird nachgewiesen, dass entsprechende Zusätze an sich bekannter anionischer Tenside einen vergleichbaren Effekt nicht bewirken können.

Als Modellsubstanz wurde ein 41%iger entmonomerisierter Polybutadienlatex des mittleren Teilchendurchmessers 110 nm verwendet. Der Latex wurde nach einem halbkontinuierlichen Zulaufverfahren bei 50°C mit Hilfe von insgesamt 1,8 Gew.-% eines Emulgatorgemisches, bestehend aus gleichen Anteilen Kaliumoleat und Natriumlaurylsulfat hergestellt, wobei als Initiatorsystem ein Redoxsystem aus einem wasserunlöslichen organischen Peroxid (p-Menthanhydroperoxid), einem wasserlöslichen Reduktionsmittel (Natriumformaldehydsulfoxylat) und Fe II Komplexonatlösung verwendet wurde.

85 g dieses Latex wurden in ein Becherglas eingewogen, eine der in untenstehender Tabelle genannte Lösung eines Emulgators X in Wasser (5 gew.%ig) unter Rühren hinzugefügt, mit 5 gew.%iger Ammoniaklösung ein pH-Wert von 10 eingestellt und mit Wasser auf 100 g aufgefüllt. Das Gemisch wurde danach noch ca. 30 Minuten langsam gerührt.

Die Rührstabilität wurde danach nach der in Beispiel 6 genannten Methode bestimmt, wobei 80 g der ca. 35%igen Latices 20 Minuten bei 20 000 Umdrehungen pro Minute unter Konstanthaltung der Temperatur von 25°C in der in Beispiel 6 genannten Apparatur mechanisch beansprucht wurden.

Um einen Vergleich der Wirksamkeit der verschiedenen Emulgatorzusätze zu ermöglichen, wurden zum Testlatex vor dem Verdünnen

a) eine kleinere Menge ($2,22 \times 10^{-4}$ Mol Emulgator X / 100 g Polymerisat)
b) eine grössere Menge ($8,57 \times 10^{-3}$ Mol Emulgator X / 100 g Polymerisat

zugesetzt. Der Effekt der kleineren (a) und der grösseren (b) Zugaben geht aus nachstehender Tabelle hervor:

| | a % Koagulat | b % Koagulat |
|---|---|---|
| Paraffinsulfonatgemisch der mittleren Kettenlänge $C_{14}$ | 4,05 | 3,44 |
| Sulfobernsteinsäuredioctylester | 3,49 | 1,16 |
| Kaliumlaurat | 3,39 | 1,42 |
| Kaliumoleat | 3,69 | 1,13 |
| Alkylbenzolsulfonat mit 12-14 C-Atomen, Na-Salze | 3,51 | 1,21 |

| | | a % Koagulat | b % Koagulat |
|---|---|---|---|
| $C_{12}H_{25}$-N-CH-COONa<br>I<br>CH-COONa<br>$CO-CH_2-CH_2-COONa$ | | 3,49 | 1,01 |
| CH-COONa<br>I<br>R-N-CH-COONa<br>I<br>$CO-CH_2-CH(SO_3Na)-COONa$<br>(Vergleich)<br>R = Octadecyl | | 1,95 | 0,18 |
| Emulgator gemäss Beispiel 1 | (erfindungsgemäss) Formel V | 1,71 | 0,14 |
| Emulgator gemäss Beispiel 2 | (erfindungsgemäss) Formel VII | 1,40 | 0,12 |
| Emulgator gemäss Beispiel 3 | (erfindungsgemäss) Formel X | 1,65 | 0,08 |

**Patentansprüche**

1. Sulfosuccinamidsäuren und -Derivate der Formel I

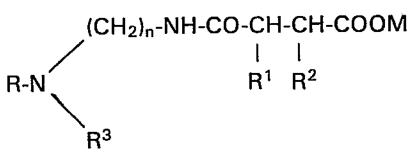

(I),

worin

R für einen geradkettigen oder verzweigten, gesättigten oder ungesättigten Alkylrest mit 8-22 Kohlenstoffatomen oder einen Rest der Formel $R^4-O-(CH_2)_3-$, ($R^4$ = Alkyl mit 8-22 C-Atomen)

von den Resten

$R^1$ und $R^2$ der eine für Wasserstoff, der andere für $-SO_3M^1$ und

$R^3$ für einen Rest der Formel

-OC-CH-CH-COOM oder der Formel
I I
$R^1$ $R^2$

$-(CH_2)_n$-NH-CO-CH-CH-COOM
I I
$R^1$ $R^2$

stehen,

n eine ganze Zahl von 2-4 und M und $M^1$ unabhängig voneinander Wasserstoff oder ein Alkali-Metall, eine Ammonium-, $C_1$ bis $C_4$-Alkylammonium- oder $C_2$ bis $C_3$-Hydroxyalkylammoniumgruppe bedeuten.

2. Verwendung der Sulfosuccinamidsäuren und -Derivate gemäss Anspruch 1 als Emulgatoren.

**Claims**

1. Sulfosuccinamido acids and derivatives corresponding to the following formula

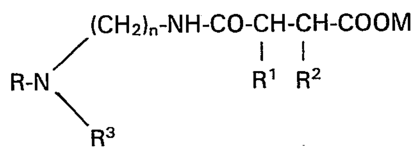

(I)

in which

R represents a linear or branched, saturated or unsaturated $C_8$-$C_{22}$ alkyl radical or a radical of the formula $R^4-O-(CH_2)_3-$ ($R^4$ = $C_8$-22 alkyl),

of the substituent $R^1$ and $R_2$,

one is hydrogen and the other is $-SO_3M_1$ and

$R^3$ is a radical of the formula

-OC-CH-CH-COOM or of the formula
I I
$R^1$ $R^2$

$-(CH_2)_n$-NH-CO-CH-CH-COOM
I I
$R^1$ $R^2$

n is an integer of 2 to 4 and M and $M^1$ independently of one another are hydrogen or an alkali metal, an ammonium, $C_1$-$C_4$ alkylammonium or $C_2$-$C_3$ hydroxyalkyl ammonium group.

2. The use of the sulfosuccinamidoacids and derivatives claimed in claim 1 as emulsifiers.

**Revendications**

1. Acides et dérivés d'acides sulfosuccinamiques de formule I

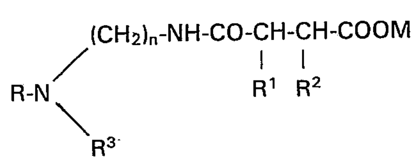

(I)

dans laquelle

R représente un reste alkyle à chaîne droite ou ramifié, saturé ou non saturé, ayant 8 à 22 atomes de carbone ou un reste de formule $R^4-O-(CH_2)_3-$, ($R^4$ = alkyle ayant 8 à 22 atomes de carbone),

l'un des restes

$R^1$ et $R^2$ représente un atome d'hydrogène, l'autre un groupe $-SO_3M,^1$ et

$R^3$ représente un reste de formule

$$-OC-\underset{R^1}{\underset{|}{CH}}-\underset{R^2}{\underset{|}{CH}}-COOM$$

ou de formule

$$-(CH_2)_n-NH-CO-\underset{R^1}{\underset{|}{CH}}-\underset{R^2}{\underset{|}{CH}}-COOM$$

n est un nombre entier de 2 à 4 et M et $M^1$ représentent indépendamment l'un de l'autre l'hydrogène ou un métal alcalin, un ion ammonium, un groupe (alkyle en $C_1$ à $C_4$)-ammonium ou (hydroxyalkyle en $C_2$ et $C_3$)-ammonium.

2. Utilisation des acides et dérivés d'acides sulfosuccinamiques suivant la revendication 1 comme émulsionnants.